# EUROPÄISCHE PATENTSCHRIFT

(11) **EP 1 191 268 B1**
(45) Veröffentlichungstag und Bekanntmachung des Hinweises auf die Patenterteilung: **03.12.2003**
(21) Anmeldenummer: 00120520.2
(22) Anmeldetag: 20.09.2000
(51) Int. Cl.: F16L 25/00

(54) **Kupplung, insbesondere Schnellkupplung, für Kraftstoffrohrleitungsabschnitte**
Coupling, especially quick coupling,for pipe sections conveying fuel
Raccord, notamment raccord rapide, pour éléments de tuyaux transportant du carburant

(43) Veröffentlichungstag der Anmeldung: 27.03.2002
(73) Patentinhaber: TI Automotive (Fuldabrück) GmbH, 34277 Fuldabrück (DE)
(72) Erfinder: Rose, Andreas, Dipl-Ing., 34266 Niestetal (DE); Otto, Torsten, Dipl. Phys. Dr., 34292 Ahnatal (DE); Apel, Kurt, Dipl.-Ing., 36286 Neuenstein (DE)
(74) Vertreter: Masch, Karl Gerhard, Dr.

(56) Entgegenhaltungen:
- EP-A- 0 525 600
- DE-A- 2 508 298
- DE-A- 3 936 928
- US-A- 1 890 290

## Beschreibung

Die Erfindung betrifft eine Kupplung, insbesondere Schnellkupplung, für mit einer elektrisch leitfähigen Innenschicht versehene Kraftstoffrohrleitungsabschnitte, bestehend aus Kupplungsgehäuse und Kupplungsstecker aus Kunststoff, wobei das Kupplungsgehäuse und der Kupplungsstecker jeweils einen Anschlussstutzen für einen der Kraftstoffrohrleitungsabschnitte aufweist.

Kraftstoffrohrleitungsabschnitte meint im Rahmen der Erfindung Rohrleitungsabschnitte, die für die Durchleitung von Kraftstoffen für Kraftfahrzeuge und dergleichen Fluiden bestimmt sind. Solche Rohrleitungen sind regelmäßig in mehreren Kunststoffschichten durch Coextrusion hergestellt. Bei den Kupplungen bzw. beim Kupplungsgehäuse und auch Kupplungsstecker können die Anschlussstutzen relativ zum restlichen Teil des Kupplungsgehäuses und Kupplungssteckers in einem beliebigen Winkel, zum Beispiel von 45, 90 oder 180°, angeordnet sein.

Bei einer aus der Praxis bekannten, druckschriftlich nicht näher belegten Kupplung der genannten Art ist dem Kunststoff des Kupplungsgehäuses und Kupplungssteckers Leitruß beigemischt, um auch im Bereich der zwischen den Kraftstoffrohrleitungsabschnitten liegenden Kupplung zwecks Unterdrückung der elektrischen Aufladung infolge Reibung des strömenden Kraftstoffes die elektrische Leitfähigkeit zu gewährleisten. Leider kann der Leitrußzusatz zu einer Materialversprödung führen, darüber hinaus kann der Leitruß im Verlaufe der Zeit in oberflächennahen Bereichen aus dem Kunststoff ausgewaschen werden. Außerdem stört die bisher in Kauf genommene mangelnde Permeationsbarrierenwirkung solcher Kupplungen. Ähnliches gilt für die Kupplung der DE 2 508 298 A.

Der Erfindung liegt die Aufgabe zugrunde, eine Kupplung der eingangs genannten Art anders als bisher elektrisch leitfähig zu machen. Vorzugsweise soll in diesem Zusammenhang auch eine Permeationsbarriere verwirklicht werden.

Hierzu lehrt die vorliegende Erfindung, eine Kupplung nach Anspruch 1 auszuführen.

Die Erfindung geht hierbei von der Erkenntnis aus, dass eine metallische Beschichtung der beiden Kupplungsteile sowohl eine Lösung des Problems der elektrischen Leitfähigkeit als auch eine Lösung des Problems der Kraftstoffpermeation ermöglicht. Für Erstere genügt die elektrisch leitende Verbindung zwischen den Außenseiten der Anschlussstutzen der beiden Kupplungsteile. Für Letztere ist die metallische Beschichtung als Innen- und/oder Außenmantel vorzusehen. Stets lässt sich dabei auch eine Verschweißung der Kunststoffe der Kupplung und Kraftstoffrohrleitungsabschnitte verwirklichen. Außerdem wird zufolge der metallischen Beschichtung eine einer Metallkupplung vergleichbare elektrische Leitfähigkeit erreicht.

Erfindungsgemäß sind das Kupplungsgehäuse und der Kupplungsstecker an Innen- und Außenseite vollständig mit der metallischen Beschichtung versehen; hierdurch wird auch das Quell- und Auswaschverhalten des Materials erheblich verbessert. Vorzugsweise ist im gekuppelten Zustand zwischen Kupplungsgehäuse und Kupplungsstecker zumindest ein elastisch verformter elektrisch leitfähiger O-Ring angeordnet, um eine definierte elektrische Verbindung zwischen Kupplungsstecker und Kupplungsgehäuse in allen Betriebszuständen zu gewährleisten. Für die Fertigung der Kupplung ist Polyoxymethylen oder glasfaserverstärktes Polyamid, insbesondere Polyamid 12 oder teilaromatisches Polyamid, besonders geeignet. Dabei sollte der Glasfaserzusatz zum Kunststoff, bezogen auf die Kunststoffmasse, 50 Gew.-% nicht übersteigen. Selbstverständlich können dem Kunststoff der Kupplung, bezogen auf die Kunststoffmasse, auch bis zu 30 Gew.-% Karbon- und/oder Stahlfasern beigemischt sein, um auch in unbeschichteten Bereichen Ladungstransport zu gewährleisten. Die metallische Beschichtung besteht erfindungsgemäß aus Nickel, Kupfer, Chrom, Zink und/oder Zinn und wird durch chemische Metallisierung, Galvanisierung oder Vakuum-Schichtabscheidung auf den Kunststoff aufgebracht. Die metallische Beschichtung weist vorzugsweise eine Gesamtstärke von bis zu 50 µm auf.

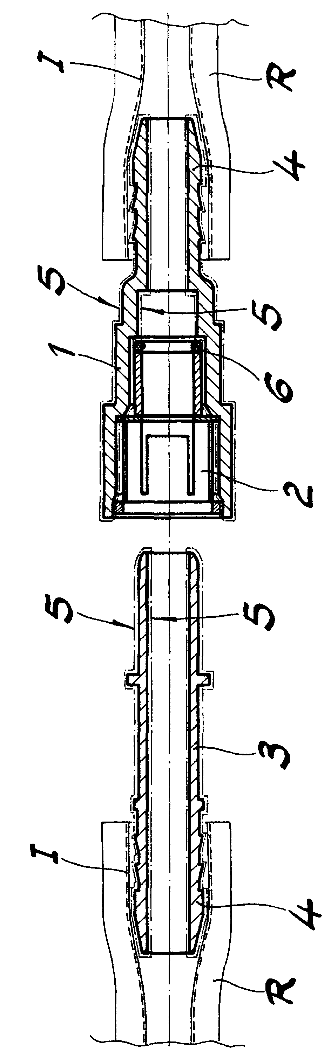

Im Folgenden wird die Erfindung anhand einer Zeichnung erläutert, deren einzige Figur im Querschnitt eine Schnellkupplung vor dem Kuppeln zeigt.

Die in der Figur dargestellte Schnellkupplung ist für die Verbindung von Rohrleitungsabschnitten R bestimmt, die der Leitung von Kraftstoffen und dergleichen in Kraftfahrzeugen dienen und mit einer elektrisch leitfähigen Innenschicht I versehen sind. Die Kupplung besteht aus einem Kupplungsgehäuse 1 mit einem Verrastungseinsatz 2 und aus einem Kupplungsstecker 3. An den den Kuppelenden entgegengesetzten Enden ist jeweils ein tüllenförmiger Anschlussstutzen 4 vorgesehen, auf den die Kraftstoffrohrleitungsabschnitte R aufschiebbar sind, was in der Figur angedeutet ist.

Abgesehen vom Verrastungseinsatz 2 sind das Kupplungsgehäuse 1 und der Kupplungsstecker 3 aus glasfaserverstärktem Polyamid 12 gefertigt und auf der Innen- und Außenseite vollständig mit einer metallischen Beschichtung 5 in Form einer Nickelgalvanisierung versehen. Diese Beschichtung 5 stellt eine Permeationsbarriere für den Kraftstoff dar und im gekuppelten Zustand der Kupplung eine elektrisch leitende Verbindung zwischen den Außenseiten der Anschlussstutzen 4. Die Beschichtung 5 weist eine Stärke von etwa 8 bis 10 µm auf.

Im Kupplungsgehäuse 1 befindet sich noch ein O-Ring 6 aus einem elektrisch leitfähigen bzw. elektrisch leitfähig gemachten Material, der beim Einführen des Kupplungssteckers 2 elastisch verformt wird und im gekuppelten Zustand für eine definierte elektrische Verbindung in allen Betriebszuständen sorgt.

## Patentansprüche

1. Kupplung, insbesondere Schnellkupplung, für mit einer elektrisch leitfähigen Innenschicht (I) versehene Kraftstoffrohrleitungsabschnitte (R), bestehend aus Kupplungsgehäuse (1) und Kupplungsstecker (3) aus Kunststoff, wobei das Kunststoffgehäuse (1) und der Kupplungsstecker (3) jeweils einen Anschlussstutzen (4) für einen der Kraftstoffrohrleitungsabschnitte (R) aufweisen, **dadurch gekennzeichnet, dass** das Kupplungsgehäuse (1) und der Kupplungsstecker (3) jeweils an Innen- und Außenseite vollständig eine metallische, durch chemische Metallisierung, Galvanisierung oder Vakuum-Schichtabscheidung auf den Kunststoff aufgebrachte Beschichtung (5) aus Nickel, Kupfer, Chrom, Zink und/oder Zinn aufweisen und die metallischen Beschichtungen (5) im gekuppelten Zustand eine elektrisch leitende Verbindung zwischen den Außenseiten der Anschlussstutzen (4) des Kupplungsgehäuses (1) und des Kupplungssteckers (3) ergeben.

2. Kupplung nach Anspruch 1, **dadurch gekennzeichnet, dass** im gekuppelten Zustand zwischen Kupplungsgehäuse (1) und Kupplungsstecker (3) zumindest ein elastisch verformter, elektrisch leitfähiger O-Ring (6) angeordnet ist.

3. Kupplung nach einem der Ansprüche 1 oder 2, **dadurch gekennzeichnet, dass** das Kupplungsgehäuse (1) und/oder der Kupplungsstecker (3) aus Polyoxymethylen oder glasfaserverstärktem Polyamid gefertigt sind.

4. Kupplung nach Anspruch 3, **dadurch gekennzeichnet, dass** der Kunststoff bis zu 50 Gew.% mit Glasfasern verstärkt ist.

5. Kupplung nach einem der Ansprüche 1 bis 4, **dadurch gekennzeichnet, dass** dem Kunststoff bis zu 30 Gew.% Carbonund/oder Stahlfasern beigemischt sind.

6. Kupplung nach einem der Ansprüche 1 bis 5, **dadurch gekennzeichnet, dass** die metallische Beschichtung (5) eine Stärke von bis zu 50 µm aufweist.

## Claims

1. A coupling, in particular a quick coupling, for fuel pipe sections (R) with an electrically conductive inner coating (I), comprising a coupling housing (1) and a coupling plug (3) of plastic, wherein the plastic housing (1) and the coupling plug (3) respectively have a connecting piece (4) for one of the fuel pipe sections (R),
**characterised in that**
the coupling housing (1) and the coupling plug (3) respectively on the interior and exterior have a completely metallic coating (5) plated on the plastic by means of chemical metallization, galvanising or vacuum layer deposition of nickel, copper, chrome, zinc and/or tin and the metallic coatings (5) in the coupled condition produce an electric conductive connection between the exteriors of the connecting pieces (4) of the coupling housing (1) and the coupling plug (3).

2. The coupling according to claim 1, **characterised in that** in coupled condition between coupling housing (1) and coupling plug (3) at least one elastic deformed electrically conductive O-ring (6) is arranged.

3. The coupling according to one of the claims 1 or 2, **characterised in that** the coupling housing (1) and/or the coupling plug (3) are made of polyoxymethyl or fiberglass reinforced polyamide.

4. The coupling according to claim 3, **characterised in that** the plastic is reinforced with fiberglass up to 50 % in weight.

5. The coupling according to one of the claims 1 to 4, **characterised in that** up to 30 % in weight carbon and/or steel fibers are added to the plastic.

6. The coupling according to one of the claims 1 to 5, **characterised in that** the metal coating (5) has a thickness up to 50 µm.

## Revendications

1. Raccord, en particulier raccord rapide, pour tronçons de conduite de carburant (R) pourvus d'une couche intérieure (I) électriquement conductrice, constitué d'un boîtier de raccord (1) et d'un connecteur de raccord (3) en matière plastique, le boîtier en matière plastique (1) et le connecteur de raccord (3) comportant chacun une tubulure de raccordement (4) pour l'un des tronçons de conduite de carburant (R), **caractérisé en ce que** le boîtier de raccord (1) et le connecteur de raccord (3) présentent chacun, sur la totalité de la face intérieure et de la face extérieure, un revêtement (5) métallique appliqué sur la matière plastique par métallisation chimique, galvanisation ou dépôt en couche sous vide, en nickel, cuivre, chrome, zinc et/ou étain, et les revêtements métalliques (5) donnent à l'état raccordé une liaison électriquement conductrice entre les faces extérieures des tubulures de raccordement (4) du boîtier de raccord (1) et du connecteur de raccord (3) .

2. Raccord selon la revendication 1, **caractérisé en ce qu'**à l'état raccordé entre le boîtier de raccord (1) et le connecteur de raccord (3) est disposé au moins un joint torique (6) électriquement conducteur, déformé élastiquement.

3. Raccord selon l'une des revendications 1 ou 2, **caractérisé en ce que** le boîtier de raccord (1) et/ou le connecteur de raccord (3) sont fabriqués en polyoxyméthylène ou en polyamide renforcé de fibres de verre.

4. Raccord selon la revendication 3, **caractérisé en ce que** la matière plastique est renforcée avec des fibres de verre jusqu'à 50 % en poids.

5. Raccord selon l'une des revendications 1 à 4, **caractérisé en ce qu'**on ajoute à la matière plastique jusqu'à 30 % en poids de fibres de carbone et/ou d'acier.

6. Raccord selon l'une des revendications 1 à 5, **caractérisé en ce que** le revêtement métallique (5) présente une épaisseur allant jusqu'à 50 µm.
